# EUROPEAN PATENT APPLICATION

(11) **EP 2 591 692 A1**
(43) Date of publication of application: **15.05.2013**
(21) Application number: 12192534.1
(22) Date of filing: 14.11.2012
(51) Int. Cl.: A43B 5/04, B29D 35/06

(54) **Sports footwear, such as a ski boot or suchlike, and corresponding method of production**

(30) Priority: 14.11.2011 IT UD20110184
(71) Applicant: Calzaturificio Dal Bello Srl, 31011 Casella d'Asolo (TV) (IT)
(72) Inventor: Battilana, Carletto, 31011 Casella d'Asolo (TV) (IT)
(74) Representative: Petraz, Gilberto Luigi

(57) **Abstract**

A sports footwear, such as a ski boot, a snowboard boot or suchlike, which comprises an upper structure or casing (11), made of a plastic material belonging to the polyolefin group and closed at the lower part, and a sole (30), made of a thermoplastic material belonging to the polyurethane group or the polyamide group The casing (11) is shaped so as to comprise in its lower base part (17) one or more cavities (20) into which the plastic material of which said sole (30) is made is inserted by molding and in a single piece, so that the sole (30) remains permanently attached to the casing (11).

## Description

### FIELD OF THE INVENTION

The present invention concerns a sports footwear for practicing winter sports, such as for example a ski boot, a snowboard boot, or similar sports equipment, in which a substantially closed and impermeable structure, called casing, made of the plastic material from the polyolefin group, defines a compartment for the user's foot. In the lower part of the casing a sole is attached, also made of plastic material.

### BACKGROUND OF THE INVENTION

A sports footwear is known, for practicing winter sports, which comprises a structure that is substantially closed and impermeable at the side and bottom, commonly called casing. In order to be light, the structure is made by molding polyethylene which is a plastic material belonging to the polyolefin group. In correspondence with the toe and heel, reinforcement elements of the sole are attached to the lower part of the casing. These are made by autonomous molding, with a material more resistant than polyolefins, such as polyurethane, and are normally suitable to be associated to the bindings of the skis or of the snowboard. As is known, plastic materials belonging to the polyolefin group and the polyurethane group are not able to adhere stably with each other if they are molded one on the other, nor can they be stably glued to each other after they have been molded autonomously. In this known sports footwear therefore, the reinforcement elements are attached to the lower surface of the casing using screws and rivets, located at determinate points, so that there is the disadvantage that the load to which the reinforcement elements are subjected is not distributed uniformly to the lower part of the casing.

Another disadvantage of this known sports footwear is that the polyurethane that the reinforcement elements are made of has a different thermal dilation from that of polyethylene, which the casing is made of. This implies that, when there are big thermal differences, stresses are created in proximity to the screws and rivets with which the two materials are connected so that, in the long term, the stresses can even cause deformations of the sole.

Another disadvantage of this known sports footwear is that the screws and rivets are not only anti-esthetic, but also make the footwear heavier.

Document CH-A-371.017 describes a footwear with an upper made of leather with an insole, an intersole and a sole or outer sole. The insole and the intersole have apertures. The sole or outer sole is made of vulcanizable rubber, which is a thermosetting material which, following vulcanization, becomes reticulate. The thermosetting material is typically used in a pre-mold where it is hot pressed. During vulcanization, the thermosetting rubber is forced under pressure inside the apertures present through the insole and intersole. A thermosetting and reticulatable material like the rubber used in document CH-A-371.017 is in no way comparable or similar, either in terms of mechanical performance or in terms of esthetic appearance, or production technology and processing, to a thermoplastic material such as polyurethane, which is normally injected, and not forced under pressure into a pre-mold. This solution is therefore not suitable, in terms of mechanical characteristics, elasticity, grip and resistance to flexion and torsion of the sole and upper and in terms of poor heat insulation provided by the upper against low temperatures, both typical features of winter sports, and also in terms of working process, in order to obtain a sports footwear for practicing winter sports, for example for skiing and snowboarding, as discussed.

Document US-A-3,807,062 describes an article of footwear that includes an inner shell and an outer shell. The inner shell is made of flexible plastic material such as polyurethane or, as a lighter and cheaper alternative to polyurethane, polyethylene. The outer shell is made of more rigid plastic material, such as acrylonitrile butadiene styrene (ABS). Consequently, document US-A-3,807,062, in no way proposes to couple polyurethane and polyethylene, but presents these materials as alternatives. In the state of the art there is therefore an important obstacle or prejudice in coupling a more resistant thermoplastic material, such as polyurethane, in order to obtain a base part of the footwear, such as a sole or an intersole, with a material belonging to the polyolefin group, in order to make the casing.

One purpose of the present invention is to obtain a sports footwear for practicing winter sports, such as a ski boot, a snowboard boot or suchlike, which has its casing made of a light plastic material, such as one of those belonging to the polyolefin group, and the reinforcement elements of the sole made with a more resistant plastic material, and in which the elements of the sole are made solid with the casing without using additional mechanical components.

Another purpose of the present invention is to perfect a method to obtain a sports footwear for practicing winter sports, such as a ski boot, a snowboard boot or suchlike, which is simple and economical and in which no mechanical operation is necessary apart from the molding steps, for example by injection, of the different plastic materials.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a sports footwear for practicing winter sports, such as a ski boot, a snowboard boot or suchlike, comprises a casing made with a plastic material belonging to the polyolefin group and closed at the lower part, and a sole or at least part of it, made of a thermoplastic material belonging to the polyurethane group or to the polyamide group.

According to a characteristic feature of the present invention, when the casing is molded, it is shaped so as to comprise, in its lower part, one or more cavities, into which the thermoplastic material that makes up the sole is inserted in a single piece, by means of a different molding, so that the sole remains permanently attached to the casing, by means of incorporation of its material into one or more of said cavities.

In this way, the introduced problem of incompatibility of the two different materials, that is, those of the polyolefin group and in particular polyurethanes, or, although to a lesser extent, polyamides, of being stably united with each other by molding or gluing, is solved profitably and with surprising advantages. In fact, thanks to the presence of said one or more cavities, the material of the sole, once it has cooled, finds itself inserted in the cavities and achieves a proper mechanical coupling, but without the aid of screws, rivets or other additional mechanical components, because it is the material of the sole itself, or part of it, that is incorporated inside the cavities.

According to a secondary characteristic of the present invention, the casing comprises at least a wall that extends downward from the perimeter of the lower part and in which said one or more cavities are made.

Advantageously, there are many cavities and they are present along the whole lower part of the casing.

According to another secondary characteristic of the present invention, the sole comprises a main body, attached in direct contact with the lower part of the casing, a front platelet and a rear platelet, which are attached in the lower part of the main body, respectively near the toe and the heel of the casing, and have a lower surface suitable to be put into contact with the ground, the ski, the snowboard or similar sports equipment.

Also the method to make a sports footwear for practicing winter sports according to the present invention is new and inventive and comprises at least a first step in which the casing is made by molding with a plastic material belonging to the polyolefin group.

According to a characteristic feature of the present invention, during the first molding step, in a lower base part of the casing, one or more cavities are made; furthermore, during a second step, following the first step, at least a main intersole body of a sole is made by molding, directly onto the lower base part of the casing, with a thermoplastic material belonging to the polyurethane group or to the polyamide group, in such a way that said thermoplastic material is inserted inside the one or more cavities so that the sole remains permanently attached to the casing by means of incorporation and clinching of the material at least of the main intersole body in said one or more cavities.

According to another secondary characteristic of the present invention, the first step comprises a first sub-step in which the lower base part of the casing is selectively subjected to at least one of the following treatments: an electric type treatment, an electromagnetic type treatment, a chemical treatment, a treatment with ultraviolet rays, each of which is able to act on a molecular level to increase the adherence of the lower base part of the casing with the material which at least the main intersole body is made of.

According to another secondary characteristic of the present invention, the second step comprises a first sub-step in which the main intersole body of the sole is made, incorporated into the lower base part of the casing, and a second sub-step in which a front element and a rear element of the sole are obtained by molding, directly on the main intersole body, with the same material which the main intersole body of the sole is made of.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view from below of a sports footwear according to the present invention;
- fig. 2 is a longitudinal section, schematized, of the sports footwear in fig. 1;
- fig. 3 is an exploded view of the sports footwear in fig. 1;
- fig. 4 is a transverse and partial section of a detail of the sports footwear in fig. 1 at the end of the first production step;
- fig. 5 is a transverse and partial section of the detail in fig. 4 at the end of a second production step.

### DETAILED DESCRIPTION OF SOME FORMS OF EMBODIMENT

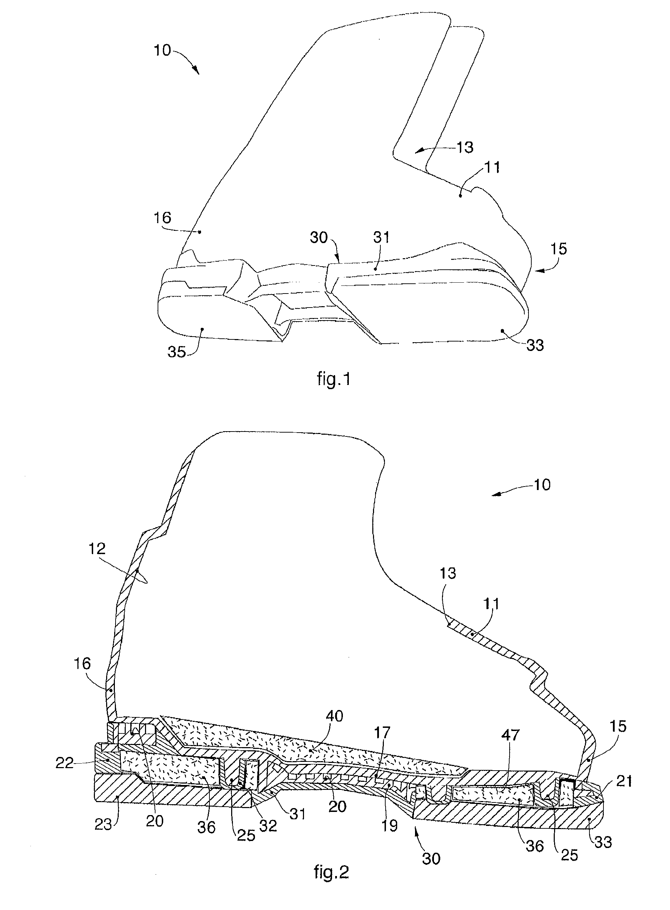

With reference to fig. 1, a sports footwear 10 for practicing winter sports according to the present invention, which in this case is a ski boot or a snowboard boot, comprises a casing 11 made with a plastic material belonging to the polyolefin group, for example polyethylene or a polymer material containing at least one type of polyethylene, or again a blend of polyethylene with other polymers or additives. In some forms of embodiment, to obtain the casing 11 toughened polyethylenes can be used, which can have properties of greater resistance, especially at low temperatures, and an appropriate elastic modulus. Examples of polyethylene or blends of polyethylenes that can be used for the casing 11 include elastomer compounds containing thermoplastic block copolymers, such as block copolymers of a styrene nature, for example SBS, SEBS, SEPS, like megol® (TPE-SEBS) or marfran® (TPE-SBS) or of other nature, like apigo® (TPE-TPO). These materials have an optimum compromise between elasticity, softness, appearance and economy in transforming the materials.

The casing 11 is shaped by means of a first molding step, for example injection molding, so as to define a compartment 12 (fig. 2), which has a shape and sizes suitable to contain the user's foot, is closed at the sides and below, is impermeable to water and has an upper aperture 13, in correspondence with which closing elements are suitable to be disposed, in a known manner and not shown in the drawings.

The casing 11 comprises a toe 15 and a heel 16 and, along a perimeter zone of its lower base part 17, a lateral wall or perimeter edge 19 (figs. 2, 3 and 4), also made by molding, which extends downward and on which, in this case, a plurality of cavities 20 are made, which can have different shapes and sizes but which, in this case, each consist of a through hole disposed lateral and transverse to the lateral wall 19.

According to a variant, not shown in the drawings, each cavity 20 can be shaped as a niche, a recess, a blind hole or other.

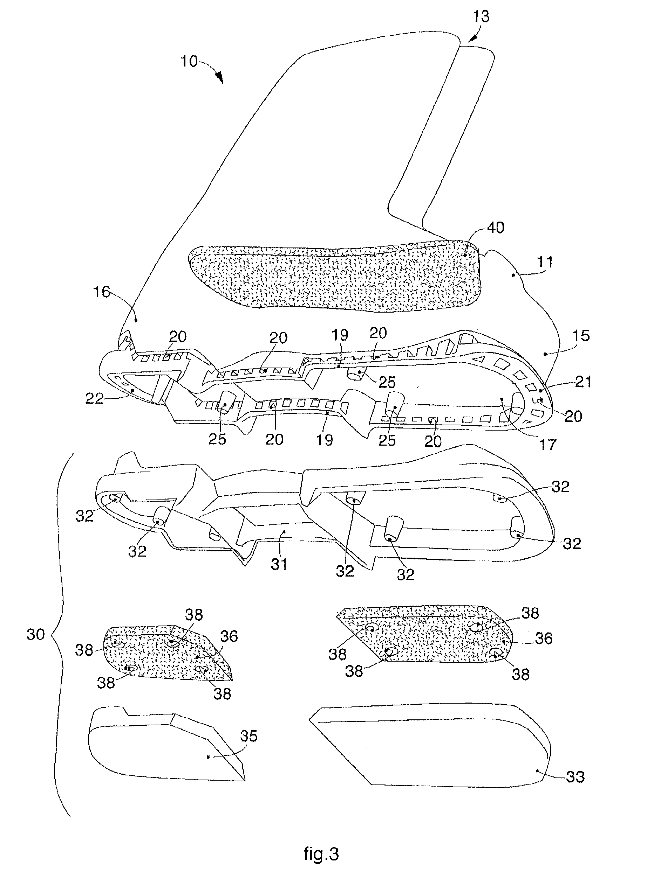

The lateral wall 19 is shaped so as to have a front portion 21 (figs. 2 and 3) which extends forward, partly beyond the toe 15 of the casing 11, and a rear portion 22 that extends backward, partly beyond the heel 16 of the casing 11. The two portions 21 and 22 are also provided with cavities 20.

Furthermore, on the lower base part 17 of the casing 11, inside the volume defined by the lateral wall 19, a plurality of centering pins 25 are made, again by molding and having a substantially cylindrical or truncated-cone shape.

Under the casing 11, which as it has been seen for example is made of polyethylene or other polymer, blend or compound based on polyolefins, a sole 30 is made, at least partly of thermoplastic material chosen between polyurethane or polyamide.

The polyamide based material is typically aliphatic polyamide or semi-aromatic, that is, nylon, such as polyamide 6 (PA 6), or polyamide 66 (PA 66), polyamide 610 (PA 610), polyamide 612 (PA 612) or again polyamide 12 (PA 12).

The use of polyamide can guarantee optimum mechanical properties, lower incompatibility with polyolefins compared with polyurethane, also including a greater uniformity of heat shrinkage. This allows, for example when the product is finished, to reduce if not to eliminate possible minimal fissures or gaps due to shrinkage or incompatibility, which can occur at the interface between the two different materials. Consequently, from the esthetic and functional point of view, the use of polyamide as described above allows a better uniformity of the possible fissures or gaps, which are very limited, a reduction of possible water infiltrations and an improved overall esthetics.

In some forms of embodiment, it is possible to use engineered polyamide-based blends or compounds, such as for example Schulamid® 6, Schulamid® 66, Schulamid® 610, Schulamid® 612 or Schulamid® 12. Another example of a product that can be used is a compound based on polyamide 6 reinforced with glass fiber, for example 30% in weight of glass fiber, such as Schulamid® 6 GF 30 TC.

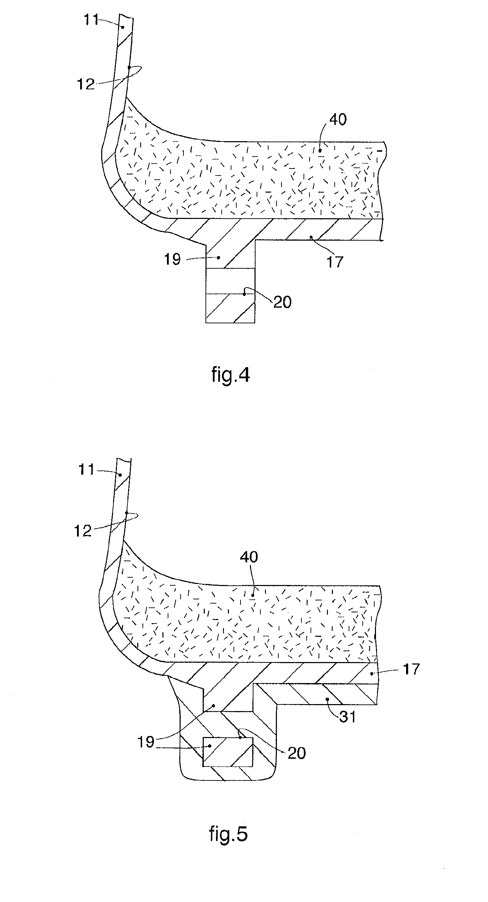

At least part of the sole 30 is made by means of a second molding, for example injection or super-molding, for example super-injection, different from and subsequent to the molding that makes the casing 11. In particular, the sole 30 comprises a main intersole body 31, which has a plan shape substantially mating with that of the lateral wall 19 of the casing 11 and the material of which, in this case polyurethane, is inserted during the second molding into the cavities 20 (fig. 4), incorporating in them and thus attaching itself permanently to the casing 11 above.

The main intersole body 31 is provided with centering seatings 32, mating in number, position and sizes, with the centering pins 25 of the casing 11.

Furthermore, in some forms of embodiment an external sole is provided, connected in the lower part of the main intersole body 31 of the sole 30. The external sole defines a resting plane of the footwear, and can be formed for example by platelets 33, 35, intended to rest on and contact the ground or the sports equipment, while the main intersole body 31 is thus kept distanced and raised from the ground or sports equipment. For example, the front platelet 33 and a rear platelet 35 are attached to the bottom of the main intersole body 31. For example, the front platelet 33 and a rear platelet 35 are also made of polyurethane or polyamide and are suitable, during use, to adhere resting on the ground or to the sports equipment, such as the ski, the snowboard or other, acting as a proper external sole, that is, in contact with and resting on the ground or the sports equipment. It is possible both to provide that the main intersole body 31 and the platelets 33 and 35 are all made of polyurethane or all of polyamide, or that the main intersole body 31 is made of polyurethane and the platelets 33 and 35 are made of polyamide, or vice versa.

The platelets 33 and 35, together with the main intersole body 31 of the sole 30, also define the front and rear attachment zones of the boot 10 to the possible bindings of a ski or snowboard or similar sports equipment, considering that in any case the main intersole body 31 remains raised with respect to the resting plane of the footwear and hence separated from the bindings or the ground.

Between each platelet 33 and 35 and the main intersole body 31 of the sole 30 a layer of heat insulating material 36 is disposed, provided with through holes 38 in correspondence with the centering seatings 32 of the main intersole body 31. This is advantageous because it allows to heat insulate the parts of the sole actually resting on the ground or on the sports equipment, that is, the platelets 33 and 35, from the main intersole body 31, which is not in contact with the ground or the sports equipment.

An insole 40, also made of a heat insulating material, is disposed inside the compartment 12 substantially in correspondence with the center of the sole 30, that is, at least to cover the zone of the sole 30 that is not heat insulated by the layers 36.

The method to make the boot 10 as described heretofore therefore comprises a first step in which the casing 11 is made by molding, and a second step, also a molding step, in which the polyurethane sole 30 is made.

The first step comprises a sub-step in which the lower base part 17 and the lateral wall 19 of the casing 11 are subjected to one or more treatments, to increase the adherence between the polyethylene and the polyurethane, such as for example a treatment called corona, that is, an electric type treatment that acts on a molecular level on the surfaces of the polyethylene, making them substantially porous.

It is clear that modifications and/or additions of parts or steps may be made to the sports footwear 10 and corresponding method of production as described heretofore, without departing from the field and scope of the present invention.

It is also clear that, although the present invention has been described with reference to a specific example, a person of skill in the art shall certainly be able to achieve many other equivalent forms of sports footwear, or corresponding method of production, having the characteristics as set forth in the claims and hence all coming within the field of protection defined thereby.

## Claims

1. Sports footwear, for practicing winter sports, such as a ski boot, a snowboard boot or similar sports equipment, comprising an upper structure or casing (11), closed at least laterally and below to define a compartment (12) in which the foot of a user is suitable to be accommodated, and made of a plastic material belonging to the polyolefin group, and a sole (30) disposed below said casing (11) and at least partly made of a thermoplastic material belonging to the polyurethane group or to the polyamide group, **characterized in that** the sole (30) comprises a main intersole body (31) made of said thermoplastic material belonging to the polyurethane group or to the polyamide group and **in that** said casing (11) is shaped so as to comprise in its lower base part (17) one or more cavities (20) into which the thermoplastic material of which said main intersole body (31) is made is inserted in a single piece and by molding, so that said sole (30) remains permanently attached to said casing (11), by incorporation and clinching of the material of said main intersole body (31) in said one or more cavities (20).

2. Sports footwear as in claim 1, **characterized in that** said casing (11) comprises at least a lateral wall (19) that extends downward from the perimeter of said lower base part (17) and in which said one or more cavities (20) are made.

3. Sports footwear as in claim 1 or 2, **characterized in that** there is a plurality of said cavities (20) which are present substantially along a large part of said lower base part (17) of said casing (11).

4. Sports footwear as in claim 1, 2 or 3, **characterized in that** each of said cavities (20) consists of a through hole and **in that** the material of said sole (30) is inserted into said through hole.

5. Sports footwear as in claims 2 and 4, **characterized in that** said through hole is disposed laterally and transversely to said lateral wall (19) of said lower base part (17) of said casing (11).

6. Sports footwear as in any claim hereinbefore, **characterized in that** the main intersole body (31) is attached directly to said lower base part (17) of said casing (11), and **in that** a front plate (33) and a rear plate (35) are attached in the lower part of said main intersole body (31), respectively in proximity to the toe (15) and the heel (16) of said casing (11) and have a lower surface suitable to be put in contact with the ground, the ski, the snowboard or similar sports equipment, while the main intersole body (31) is raised with respect to a resting plane of said footwear and does not come into contact with the ground, the ski, the snowboard or other similar sports equipment.

7. Sports footwear as in claim 6, **characterized in that** said sole (30) also comprises one or more layers of heat insulating material (36) disposed between said main intersole body (31) and said front (33) and rear plates (35).

8. Sports footwear as in any claim hereinbefore, **characterized in that** it also comprises an insole (40) made of heat insulating material, disposed inside said compartment (12), substantially in correspondence with the center of said sole (30).

9. Method to make a sports footwear for practicing winter sports, such as a ski boot, a snowboard boot or similar sports equipment, comprising at least a first step in which an upper structure or casing (11), closed at least laterally and below to define a compartment (12) in which the foot of a user is suitable to be accommodated, is made by molding with a plastic material belonging to the polyolefin group, **characterized in that** during said first step, in a lower base part (17) of said casing (11), one or more cavities (20) are made, and **in that** during a second step, subsequent to said first step, at least a main intersole body (31) of a sole (30) is made by molding, directly on said lower base part (17) of said casing (11), of a thermoplastic material belonging to the polyurethane group or the polyamide group, so that said thermoplastic material is inserted inside said one or more cavities (20), in order that said sole (30) remains permanently attached to said casing (11), by incorporation and clinching of the material of at least said main intersole body (31) in said one or more cavities (20).

10. Method as in claim 9, **characterized in that** said first step comprises a first sub-step in which said lower base part (17) of said casing (11) is selectively subjected to at least one of the following treatments: a treatment of the electric type, a treatment of the electromagnetic type, a chemical treatment, a treatment with ultraviolet rays, each of which is able to act on a molecular level to increase the adherence of said lower base part (17) of said casing (11) with the material of at least said main intersole body (31).

11. Method as in claim 9 or 10, **characterized in that** said second step comprises a first sub-step in which the main intersole body (31) of said sole (30) is made, incorporated in said lower base part (17) of said casing (11), and a second sub-step in which a front plate (33) and a rear plate (35) of said sole (30) are made by molding, directly on said main intersole body (31), with the same material of which said main intersole body (31) is made.
